# EUROPEAN PATENT SPECIFICATION

(11) **EP 0 470 124 B1**
(45) Date of publication and mention of the grant of the patent: **16.07.1997**
(21) Application number: 90906384.4
(22) Date of filing: 23.04.1990
(51) Int. Cl.: H04N 7/16

(54) **ARRANGEMENT IN A TELEVISION COMMUNICATION SYSTEM**
ANORDNUNG IN EINEM FERNSEHÜBERTRAGUNGSSYSTEM
AGENCEMENT DANS UN SYSTEME DE COMMUNICATION TELEVISUEL

(30) Priority: 24.04.1989 NO 891690
(43) Date of publication of application: 12.02.1992
(73) Proprietor: COMPLAN NETWORK A/S, N-1360 Nesbru (NO)
(72) Inventor: GYSLER, Tom, N-1360 Nesbru (NO); LEER, Knut, N-0272 Oslo 2 (NO)
(74) Representative: Barnard, Eric Edward
(86) International application number: NO9000073
(87) International publication number: WO9013206

(56) References cited:
- US-A- 4 015 074
- US-A- 4 057 829
- US-A- 4 090 220
- US-A- 4 360 828

## Description

### Field of the invention

The present invention relates to a television communication system, comprising a central control unit communicating with a plurality of identifiable user apparatus.

### Field of application

The present invention finds application in connection with oil platforms, hotels, airports and exhibition areas, in which it is required to present information to the subscribers or users, independently of the channel or the program which is watched by the user. This information should be presented to either a specific television apparatus having a specific physical location, to groups of television apparatus having a mutual common identity and being installed at locations which are to be defined physically, or to all television apparatus within the same system.

### Prior art

There are previously known related television communication systems within the above fields of application, but these systems have not been able to generate a high resolution video picture in the television apparatus representing graphic character sets. Such graphic or font characters could for example be Hebrew, Chinese, Japanese, cyrillic, etc. printing signs. Further, none of these systems are able to generate a video picture or sound in the television apparatus on the basis of a digital transmission to said apparatus.

Besides, the prior art suggest a device which is provided externally to the television apparatus, for example in its own cabinet. This is a solution which requires a separate current supply and a separate receiver channel including modulator/demodulator and circuits for intermediate frequencies. In other words, this prior art technique involves the duplication of components already included in the television apparatus, resulting in correspondingly higher production costs and poor economy.

Further the receiver unit in a television system processes the analogue video signal, and modulates the same up to a specific television channel. However, this implies a derogation of the signal to the antenna input of the television apparatus, due to noise, synchronizing and interference, etc. This will be the case in all previously known information systems belonging to the prior art.

EP-A-0128769 and GB-A-2118750 disclose a technique as discussed above. In addition, these prior art systems are used for coding and decoding, i.e. scrambling, of video signals in a pay television system, which is intended for use in another user group.

There is also known an ASIS system for 2 M Electronics, which is based on a technique including picture/information transmission, wherein the signals are transferred in or as a part of the video signal, and wherein the picture is provided as a TELETEXT transmission. However, this system involves a reduced transmission speed and reduced overall capacity, due to the narrow bandwidth/slot included therein.

Moreover, in the known teletext systems the additional teletext signal information is wholly dependent on the presence of the video signal and the selected channel in the sense that the absence of the video signal or the switching of channels will result in the loss of the teletext information. It is also not possible to control user apparatus with teletext signals.

Other prior art patent specifications disclose systems having a further limitation in number of transmissions or channels to be used for analogue message information and pay television channels.

US-A-3.057.829 discloses a pay TV or control monitoring system using frequencies outside the standardized TV frequency range, adapted for only transmitting analogue HF/video signals for the subsequent modulation thereof to a standard video HF channel. This system includes a limitation of two service programs plus two video programs provides no video information, and provides only one-way digital reporting about position of mechanical selector.

US-A-4.090.220 discloses a pay TV system based on one cable per analogue TV channel and suggests a cable system including up to 34 coaxial cables running in parallel from each selector unit, and further a twisted 2 pair cable for each subscriber, wherein only one analogue HF/TV video signal can be selected one at the time among said 34. The disclosed system is not a standard cable system, and consequently discloses a completely different technique.

US-A-4.369.828 discloses a power load control and bilateral signalling apparatus, i.e. an apparatus for controlling electro mechanical devices, including for example air conditioners and heaters, etc., and the analogue HF/TV video signals may be transmitted outside the standardized TV frequency range for later being modulated to a standard HF/TV channel. The system also includes digital transmission, but for quite another purpose than suggested by the present invention. The prior art system allows for no video information, and is limited to the transmission of off air video programs between channel 6 and 7.

US-A-4.015.074 relates to an information system for the transmission of a specific analogue information via a cable system, including a message to each individual television apparatus. The analogue information signal and a direct current signal are transmitted through the cable system and to a unit at the television apparatus, in which unit the direct current signal activates a relay which connects the input analogue HF/TV signal to a modulator. The output from the modulator is connected to the intermediate frequency stage of the television apparatus, and consequently operates as a channel receiver. However, this system includes no connection to the RGB video circuits, and the prior art system neither allows for the installation of a special unit in each television apparatus, and the further transmission of the information signals takes place from person to person. Neither does this prior art system suggest digital transmission of relevant data.

All of the above prior art systems discussed above are dependent on modulated analogue video signals, or television signals, for achieving their functionality.

### Disclosure of the invention

An object of the present invention is to provide a television communication system which functions as a message distributor without any analogue signals being transmitted through the cable system.

Another object of the present invention is to avoid that a malfunction in the circuits included in the television communication system should influence the normal television transmission.

Yet another object of the present invention is to provide a television communication system which is not limited in the number of channels designed as standard HF/TV channels used for special purposes, for example pay television, group television, information television, etc.

Still another object of the present invention is to provide a television communication system which provides a special further system providing digital one-way and/or two-way communication signals to a plurality of users, independently of analogue high frequency video signals, and the transmission of information in both directions with a very high speed, for example 10 M bits per second, and a still higher typical speed by use of optical cables.

Further, an object of the present invention is to provide a further system including high quality graphics modes for presenting a picture having higher resolution than a standard teletext picture, especially for presenting graphics, other fonts, Chinese writing signs, etc.

Still another object of the present invention is to provide a module means included in each user apparatus and arranged for utilizing existing functions, currently supply and signals in the existing television apparatus, for example for remote control, channel selection, synchronization, sleep on/off, etc., and thus keep the installation thereof very simple and at low cost.

The present invention provides a television communication system, employing a plurality of identifiable user apparatus, each having its own control means, which are connected to receive standard high frequency television signals, which may include teletext information, via selectable video channels; including an arrangement for selectively presenting further audio and/or video information to the user apparatus and for controlling the user apparatus, either individually or in a group, with the aid of digital signals generated and transmitted independently of the television signals and the selected video channel and capable of one-way or two way communication; said arrangement comprising a central computer and control unit connected at least to transmit the digital signals and thereby to control the selected user apparatus and dedicated module means included in each said user apparatus between an input of said user apparatus and the video colour circuits of said user apparatus and connected to the control means thereof to effect control in response to the digital signals, said module means serving to receive and decode the digital signals and comprising a text and graphics processor which co-operates with a unit having a video interface for converting said digital signals to locally generated analogue video signals which are then presented to the user as the further audio and/or video information, the latter being in the form of text or high resolution pictures and graphics displayed on a screen of said user apparatus independently of video images, which may include teletext, derived from the television signals in the sense that the further video information can be superimposed on the video images on the screen derived from the television signals.

Preferably, said module means is adapted for communication of audio and video signals through the same medium as all other usual standarized high frequency television signals, but independently thereof.

Still preferably, the module means is provided as an integrated module within the user apparatus.

It is to be understood that the digital communication of audio and video signals of said module means is preferably performed through phase shift modulation, pulse code modulation, or similar, in which said signals are represented in digital form.

In an preferred embodiment said module means comprises an input connected to a splitter means which is also connected to the input medium of the user apparatus, and an output connected to the video colour circuits of the apparatus.

Further, it is convenient that said module means comprises a storage unit for storing information relating to audio and/or video information, for presenting same through an associated user apparatus, loud speaker and/or screen, respectively.

It is further to be understood that it is preferable that each module means within a separate television apparatus has a unique identity, for example a logic digital address through which the central unit can communicate simultaneously or after pre-selection thereof. Correspondingly, each module means may comprise a preferably programmable group identity, for example a logic digital group address, through which the central unit can communicate simultaneously or after pre-selection thereof.

In consequence thereof, said module means for communication of audio and video signals is adapted to communicate with said central unit, so as to present any data to an individual apparatus, a group of apparatus or all apparatus connected therewith, independently of whether the television apparatus in question is or are switched on or off.

In order to facilitate the overall control of each apparatus, said module means can be connected to the micro-controller bus of the apparatus to enable control of said module means through any standard or modified operating unit(s) for the apparatus in question. Said module means could then also be allowed to control the electronic circuits and functions of the apparatus in a manner corresponding to the standard remote control operating unit(s) of the apparatus in question.

It is to be understood that the communication with any television apparatus may take place through a standard medium, ie. cable, fibres, links, microwaves, etc.

An analogue switch can be provided in said video colour circuits of each user apparatus and the locally generated analogue signals can be outputted to this switch.

### Brief Description of the Drawings

The invention will now be further disclosed in connection with the following description taken in conjunction with the enclosed drawings.

Figure 1 is a block diagram of a standard television apparatus in which the present invention is implemented.

Figure 2 is a block diagram of a module means according to the present invention.

Figure 3 illustrates a typical television cable installation comprising a plurality of user apparatus and a control unit.

### Description of preferred embodiments

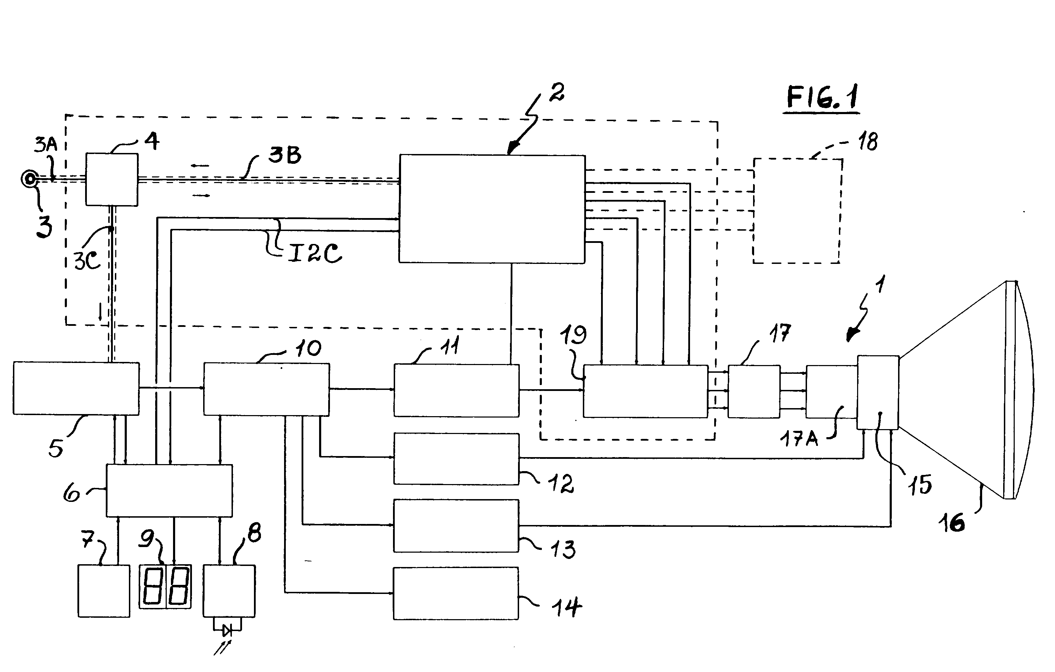

In Fig. 1, which is a block diagram of a standard television apparatus, for example of European model, the television apparatus has been designated generally by reference numeral 1 and in connection with such a television apparatus the present invention can be implemented for example as a module means, here designated generally by reference numeral 2.

As further illustrated in Fig. 1, the television apparatus 1 is connected to an input antenna 3, through a splitter 4, which makes part of the present invention, and the antenna input is further connected to a channel selector 5 which communicates with a micro controller unit 6, which in turn receives command signals from a front panel 7 or through a sender/receiver-unit 8, adapted for operation through a remote control unit (not illustrated) by means of for example infrared radiation. The micro controller 8 is also connected to a display unit 9, for indicating for example the selected channel, or for any other information relating to the modus of the television apparatus in question.

The channel selector 5 communicates with the micro controller 6 via a so-called I2C bus which can be modified according to requirements, i.e. through the software which can be implemented in the micro controller 6.

The channel selector 5, as well as the micro controller 6 also communicate with an MF/IF synchronizing unit 10, which in turn controls a colour decoder unit 11, a unit for vertical circuits 12, a unit for horizontal circuits 13 as well as unit for audio circuits 14.

It is to be noted that the unit for audio circuits 14 may control not illustrated load speakers, whereas the units for vertical circuits 12 and horizontal circuits 13 are connected to the deviation coil 15 of the television screen 16, whereas the colour decoding unit 11 has its output connected through a video amplifier 17 which amplifies each of the colours in question, i.e. red, green and blue, each of which colour is transmitted to an electronic beam gun, 17A prior to being influenced by the deviation coil 15 for reconstruction of the colour picture on the screen 16.

In connection with the television apparatus 1, illustrated in Fig. 1, the present invention which relate to an arrangement in a television communication system, comprising a central control unit communicating with a plurality of identifiable user apparatus, for example the apparatus as disclosed so far, the present invention has been implemented therein so as to constitute a further system providing digital one-way and/or two-way communication signals, independently of standardized analogue high frequency or television signals, and providing conversion of said digital signals to audio and/or video signals in for example the module means 2, included in the apparatus 1 illustrated in Fig. 1.

Consequently, Fig. 1 illustrates a preferred embodiment wherein the invention has been implemented preferably as a module means 2, which preferably constitutes an integrated module of the user apparatus 1. Thus, the module means 2 may utilize existing functions, current supply and signals in the existing television apparatus. Further, to bring forth an appropriate communication with the signals received through the antenna 3, the splitter 4 has been included in the antenna cable 3A so as to split the antenna cable 3A in a first connection between said splitter 4 and the module means 2 as indicated by the connection 3B, as well as in a second connection 3C between said splitter 4 and said channel selector 5.

It is to be understood that the splitter 4 may be included in the module means 2, the output from the antenna 3 then being connected directly thereto, and from there connected to the channel selector 5 of the apparatus in question.

By either interconnection of the splitter 4 and the special module means 2, the system allows for the use of the existing remote control of the television apparatus, especially through the I2C bus, and especially for controlling the functions relating to the present invention, and being appropriately materialized in the special module means 2.

In television apparatus having no teletext, as illustrated by the dashed box 18, the special module means 2 may be adapted to each model of the television apparatus in question. Since any apparatus lacking a teletext unit 18, does not include an analogue switch 19, such analogue switch 19 may be included as a part of the special module means 2, the connection thereof being in parallel between the colour decoder 11 and the video amplifier 17. In other words, the analogue switch 19 will in this case most appropriately be part of the special module means 2 which in turn most appropriately may be laid out as a separate digital communication, text and processing card. The mounting thereof can then take place by using existing sockets in a television apparatus, or the special module means for communication of sound, text and video signals according to the present invention may be integrated in the other circuits of any apparatus, preferably during the line production of such apparatus. In television apparatus having sockets for teletext cards, the special card module-means according to the present invention could possibly be mounted in the same socket as adapted for said teletext card.

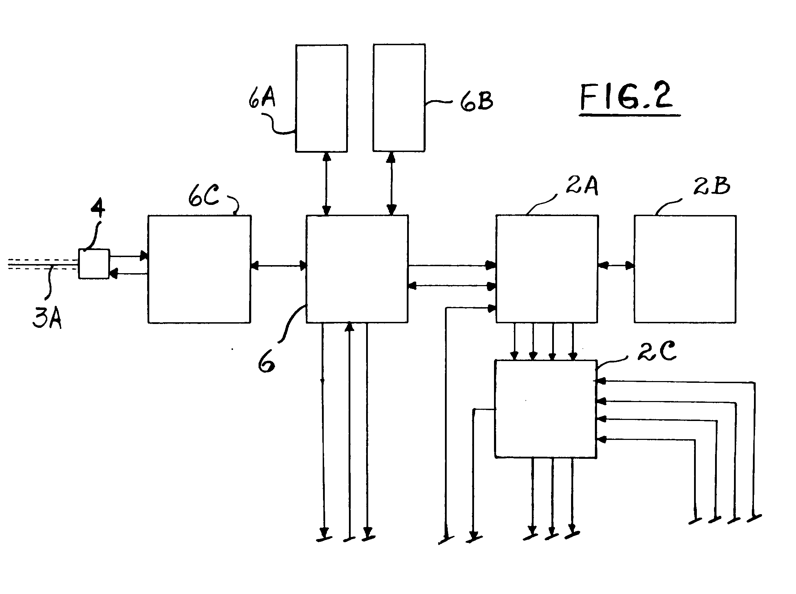

Fig. 2 illustrates a block diagram of a special module means according to the present invention, in which the module means 2 itself comprises a text and graphic processor 2A, a random access memory 2B, as well as a combined unit 2C which operates as a video/text interface and also an analogue switch. The Fig. 2 embodiment also illustrates how the special module means 2 is interconnected with the micro controller 6, which otherwise communicates with a read only memory 6A and a random access memory 6B, as well as a modem unit 6C. The modem unit 6C communicates with the splitter 4 which in turn receives signals from the antenna 3 via the antenna medium 3A, which for example may be any appropriate medium.

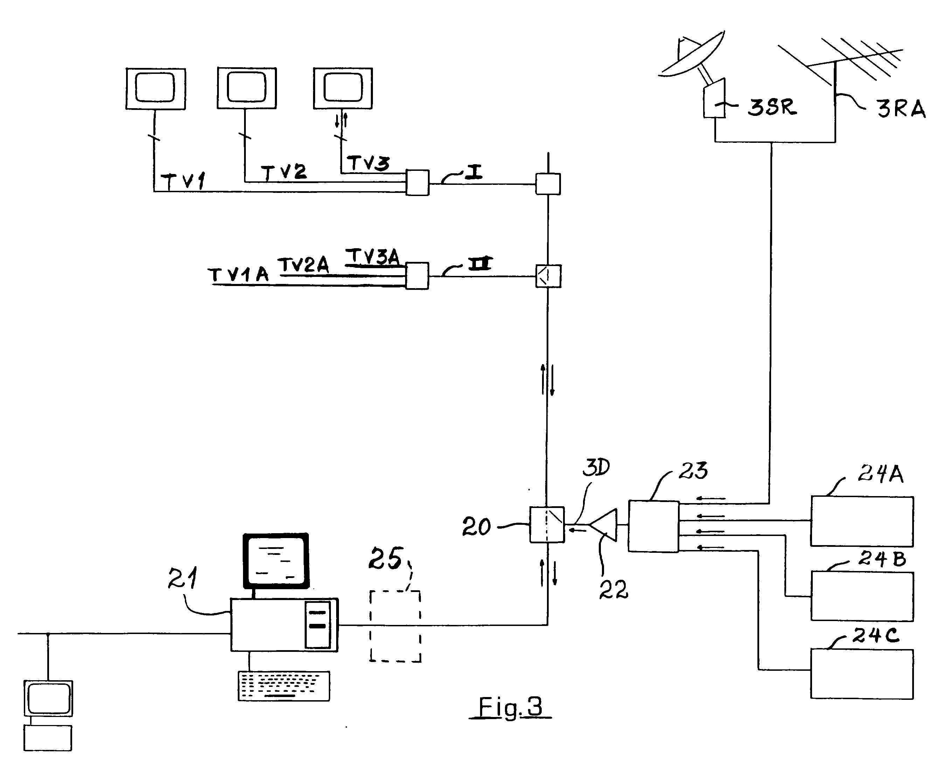

Fig. 3 illustrates a typical television cable installation, in which the present invention can find specific application, and in which each television apparatus includes for example the special embodiment of the module means disclosed above.

In Fig. 3 there are illustrated a plurality of identifiable user apparatus indicated TV1, TV2, TV3 etc., which may belong to group I as well as other individual identifiable user apparatus TV1A, TV2A, etc., which may belong to group II.

All of said television apparatus are connected to a common television medium, for example a television cable 3A, which in turn via a distribution unit 20 is connected to a central computer 21 which may monitor the complete television communication system, as well as to standard high frequency video channels, as indicated by reference numeral 3D. The high frequency video channel 3D is further via an amplifier 22 receiving signals from any type of antennas and associated receivers, for example a satellite receiver 3SR, and a beam antenna 3RA, which through the cable 3AA delivers high frequency video signals to a selector box 23. The selector box 23 also receives signals from a plurality of video players 24A, 24B, 24C from which any appropriate recorded video programs may be distributed on to the present television communication system illustrated in Fig. 3.

By means of the further system represented by the present invention, and providing the above disclosed digital one-way and/or two-way communication signals, namely independently of the standardized analogue high frequency or television signals, it is possible for the central computer 21, possibly in communication with a further special computer, to further communicate with each television apparatus, or selected groups thereof.

This is due to the fact that the conversion of said digital signals to audio and/or video signals is provided by a special module means which may be included in each user apparatus, and which may be controlled by a central control unit, for example the control unit 25 associated with the main computer 21. The digital one-way and/or two-way communication signals, i.e. for communication of sound, text and video signals takes place through the same medium as all other usual standardized high frequency television signals, that is through the medium 3A illustrated in Fig. 3, but independently of said standardized high frequency television signals.

By appropriate operation of the control unit 25, it is possible to select each individual module means in each apparatus, and most appropriately this digital one-way and/or two-way communication of signals is performed through phase shift modulation, pulse code modulation or similar, and in which modulation said signals are represented in digital form. The digital data received in each apparatus are processed in accordance with the software included in each special module means for implementing the supervision, control or generation of text, sound or picture as programmed and transmitted by the central control unit 25. In each apparatus the processor 2A for processing text and graphics will process the picture information from the data signals directly, or from any appropriate memory connected thereto. At an appropriate point of time, the picture is outputted as video RGB signals to the analogue switch 2C (19), and depending on the command signals associated therewith, the RGB signals will be presented on the screen 16 as a high resolution picture, or superimposed on the standard video pictures, possibly upon the teletext.

The special module means according to the present invention is, as discussed in connection with Fig. 1, integrated with the standard control means of the individual TV apparatus, for thereby allowing an external control of each apparatus, such that the apparatus is still adapted for switching to specific channels or text information or for the execution of other functions. These other functions may include remote control, the switching on of the television apparatus from the control unit 25 of the main computer 21, for example for alarm indication, and said functions also include messages for groups of users, or messages to all apparatus.

In the same manner as the incoming digital signals are transmitted from the central control unit 25, the local control functions, including remote control or panel control, will allow for return transmission of messages, for example a reply to the functions presented on the picture screen. Such functions or messages may be presented as menus, and the remote control or the panel control of each apparatus would then, of course, also include a menu controlled reply function back to the central control unit.

In connection with the various fields of application or user groups, the special module means may for the communication with the central control unit, include various types of software taking care of any function having special reference thereto.

When considering the present communication system installed in a hotel, or possibly in a group of hotels, the information presented through this digital one-way and/or two-way communication independently of standardized analogue high frequency or television signals, may include any internal messages to the guests, for example about opening hours for restaurant, bar or discotheques, as well as serving of meals and menus related thereto. Opening hours for musical events and entertainment may also be included in the messages from the central unit, as well as ordering of tables via the remote control, information about flight departures could in a special embodiment possibly be receivd on-line from the airport through the central control unit.

News may be presented as extracts from for example newspapers, but then in the guest's own language via the central computer.

Room service may of course be included in this communication, both as regards the ordering thereof and any appropriate time for the execution thereof.

Included in the service to be performed by the present television communication system is also video channel control, in which for example video films which are not appropriate for children, could be blocked in any separate room or any groups of rooms. This service may also include the transmission of information between groups of guests, including direct transmission from the meeting room of any group.

Exchange of messages to each guest through the associated television apparatus in the guest room is also contemplated, such message information also allowing for a feed-back message for the receipt of said message information.

Such information could also be transmitted to a group of guests, including feed-back of each individual guest.

Common messages to all rooms of one or more stores about fire or smoke alarm may also be included, such messages also including information with pictures regarding possible escape or emergency exits.

In connection with oil platforms it would be appropriate to include any security system in the present television communication system, in which messages of all types of alarms could be transmitted to groups or individual rooms or associated television apparatus. Also in this connection any escape exits including indication of not launched lifeboats would be appropriate.

In connection with congresses and exhibitions the present digital one-way and/or two-way communication system would be appropriate for transferring information to groups or specific areas included in the overall congress or exhibition area. Simultaneous interpretation of various languages may be implementet, including selection of any appropriate language, which selection may also include channels for people with reduced hearing ability.

In connection with hospitals a selection of entertainment programs would be contemplated, as well as a control thereof for the various groups of patients. For example, the children's division should be excluded from what is presented for adults, and possibly any television apparatus could be switched off during certain time intervals.

Messages could be provided for individual persons, for any staff or for any patient. Alarms including emergency and mobilization of specific groups could also be included.

It is to be understood that by means of the specific module means according to the present invention, which is adapted for communication of sound, text and video signals independently of the standardized high frequency television signals, and which includs any appropriate software program for sound, text and video, all of the above described messages including internal information, can be provided in a language understandable for the user invloved, or the guest in question. The present arrangement is also, in addition to usual text, able to provide individual graphic fonts, for example cyrillic, Chinese or Japanese language signs.

## Claims

1. A television communication system, employing a plurality of identifiable user apparatus (TV1, TV2, TV1A, TVRA etc), each having its own control means, which are connected to receive standard high frequency television signals, which may include teletext information, via selectable video channels (3D); including an arrangement for selectively presenting further audio and/or video information to the user apparatus and for controlling the user apparatus, either individually or in a group, with the aid of digital signals generated and transmitted independently of the standard high frequency television signals and the selected video channel and capable of one-way or two way communication; said arrangement comprising a central computer and control unit (21, 25) connected at least to transmit the digital signals and thereby to control the selected user apparatus and dedicated module means (2) included in each said user apparatus between an input (3A) of said user apparatus and the video colour circuits (11,12,13,14) of said user apparatus and connected to the control means thereof to effect control in response to the digital signals, said module means (2) serving to receive and decode the digital signals and comprising a text and graphics processor (2A) which co-operates with a unit having a video interface (2C) for converting said digital signals to locally generated analogue video signals which are then presented to the user as the further audio and/or video information, the latter being in the form of text or high resolution pictures and graphics displayed on a screen of said user apparatus independently of video images, which may include teletext, derived from the television signals in the sense that the further video information can be superimposed on the video images on the screen derived from the television signals.

2. A system as claimed in claim 1, wherein each module means (2) is integrated within the associated user apparatus.

3. A system as claimed in claim 1 or 2, wherein the digital signals transmitted to said module means (2) are represented as phase shift modulation, pulse code modulation or similar.

4. A system as claimed in any one of claims 1 to 3, wherein each module means (2) further comprises a storage unit (2B) for storing information relating to the audio and/or video information derived from the locally generated analogue signals.

5. A system as claimed in any one of claims 1 to 4, wherein each module means (2) has a unique identity, for example a logic digital address, through which the central computer and control unit (21,25) can establish communication after pre-selection thereof.

6. A system as claimed in any one of claims 1 to 5, wherein each module means (2) comprises a programmable, group identity, for example a logic digital group address, through which the central computer and control unit (21,25) can establish communication simultaneously or after pre-selection thereof.

7. A system as claimed in any one of claims 4,5 or 6, wherein each module means (2) is arranged to communicate with said central computer and control unit (21,25) so as to present any data to an individual apparatus, a group of apparatus or all apparatus connected therewith, independently of whether the user apparatus in question is or are switched on or off.

8. A system as claimed in any one of the preceding claims, wherein each module means (2) is connected to a micro controller bus (12C) of the associated user apparatus to enable control of said module means (2) through any standard or modified operating unit(s) of the apparatus.

9. A system as claimed in any one of the preceding claims, wherein each module means (2) can control with the associated control means, the electronic circuits and functions of the associated user apparatus in a manner corresponding to a standard remote control operating unit (8).

10. A system as claimed in any one of the preceding claims, wherein the communication between the central computer and the control unit (21,25) and said module means (2) in any television user apparatus takes place through a standard medium, i.e. cable, fibres, links, micro-waves, etc.

11. A system as claimed in any one of the preceding claims wherein an analogue switch (19) is provided in said video colour circuits of each user apparatus and the locally generated analogue signals are also outputted to said switch (19).

## Patentansprüche

1. Fernsehübertragungssystem mit einer Vielzahl identifizierbarer Anwendergeräte (TV1, TV2, TV1A, TVRA etc.), von denen jedes eine eigene Steuereinrichtung aufweist und die über wählbare Videokanäle (3D) angeschlossen sind, so daß sie Standardhochfrequenzfernsehsignale empfangen, welche Teletext-Informationen beinhalten können; mit einer Anordnung zur wahlweisen Darstellung weiterer Audio- und/oder Videoinformationen am Anwendergerät und zur Steuerung der Anwendergeräte, entweder individuell oder gruppenweise, mit Hilfe von digitalen Signalen, die unabhängig von den Standardhochfrequenzfernsehsignalen und dem gewählten Videokanal erzeugt und übertragen werden und die eine Übertragung in einer Richtung oder in beiden Richtungen ermöglichen; wobei diese Anordnung einen Zentralrechner und eine Steuereinheit (21, 25), die zumindest zur Weiterleitung der digitalen Signale und hierdurch zur Steuerung des ausgewählten Anwendergerätes und einer zugeordneten Moduleinrichtung (2) angeschlossen ist, die in jedem Anwendergerät zwischen einem Eingang (3A) des Anwendergeräts und den Farbvideokreisen (11, 12, 13, 14) des Anwendergeräts angeordnet und an die Steuereinrichtung desselben angeschlossen ist, um eine Steuerung in Reaktion auf die Digitalsignale zu bewirken, wobei die Moduleinrichtung (2) dazu dient, die Digitalsignale zu empfangen und zu decodieren, und einen Text- und Grafik-Prozessor (2A) aufweist, der mit einer Einheit zusammenarbeitet, die eine Video-Schnittstelle (2C) zur Umwandlung der Digitalsignale zu lokal erzeugten analogen Videosignalen aufweist, die dann dem Anwender als weitere Audio- und/oder Video-Informationen gezeigt werden, wobei letztere in Form von Text oder Hochauflösungsbildern und -grafiken auf einem Bildschirm des Anwendergeräts unabhängig von Videobildern dargestellt werden, die Teletext beinhalten können und aus den Fernsehsignalen abgeleitet werden, in dem Sinne, daß die weiteren Video-Informationen den Videobildern auf dem Bildschirm überlagert werden können, die aus den Fernsehsignalen abgeleitet werden.

2. System nach Anspruch 1, bei dem jede Moduleinrichtung (2) innerhalb des zugeordneten Anwendergeräts integriert ist.

3. System nach Anspruch 1 oder 2, bei dem die auf die Moduleinrichtungen (2) übertragenen Digitalsignale als Phasenverschiebungsmodulation, Pulscodemodulation oder ähnliches dargestellt werden.

4. System nach einem der Ansprüche 1 bis 3, bei dem jede Moduleinrichtung (2) desweiteren eine Speichereinheit (2B) zur Speicherung von Informationen aufweist, die auf die Audio- und/oder Video-Informationen bezogen sind, die aus den lokal erzeugten Analogsignalen abgeleitet werden.

5. System nach einem der Ansprüche 1 bis 4, bei dem jede Moduleinrichtung (2) eine eindeutige Identität hat, z.B. eine Logik-Digitaladresse, durch die der Zentralrechner und die Steuereinheit (21, 25) nach ihrer Vorauswahl eine Verbindung schaffen kann.

6. System nach einem der Ansprüche 1 bis 5, bei dem jede Moduleinrichtung (2) eine programmierbare Gruppenidentität hat, z.B. eine Logik-Digitalgruppenadresse, durch die der Zentralrechner und die Steuereinheit (21, 25) nach ihrer Vorauswahl simultan eine Verbindung herstellen kann.

7. System nach Anspruch 4, 5 oder 6, bei dem jede Moduleinrichtung (2) so angeordnet ist, daß sie an den Zentralrechner und die Steuereinheit (21, 25) angeschlossen ist, so daß sie jedwede Daten an einem einzelnen Gerät, einer Gruppe von Geräten oder allen an sie angeschlossenen Geräten unabhängig davon darstellen kann, ob das betreffende Anwendergerät bzw. die betreffenden Anwendergeräte ein- oder ausgeschaltet ist bzw. sind.

8. System nach einem der vorangehenden Ansprüche, bei dem jede Moduleinrichtung (2) an einem Mikrosteuerbus (12C) des zugeordneten Anwendergeräts angeschlossen ist, um eine Steuerung der Moduleinrichtung (2) durch jede standardisierte oder modifizierte Betriebseinheit bzw. Betriebseinheiten des Anwendergeräts zu ermöglichen.

9. System nach einem der vorangehenden Ansprüche, bei dem jede Moduleinrichtung (2) mit der zugeordneten Steuereinrichtung die elektronischen Kreise und Funktionen des zugeordneten Anwendergeräts in einer Weise steuern kann, die einer Standardfernsteuerungsbetriebseinheit (8) entspricht.

10. System nach einem der vorangehenden Ansprüche, bei dem die Verbindung zwischen dem Zentralrechner und der Steuereinheit (21, 25) und der Moduleinrichtung (2) in jedem Anwenderfernsehgerät durch ein Standardmedium, i.e. Kabel, Fasern, Leitungen, Mikrowellen, etc., stattfindet.

11. System nach einem der vorangehenden Ansprüche, bei dem in den Farbvideokreisen jedes Anwendergeräts ein Analogschalter (19) vorgesehen ist und die lokal erzeugten Analogsignale ebenfalls zu dem Schalter (19) ausgegeben werden.

## Revendications

1. Système de communication télévisuel, employant une multiplicité d'appareils d'utilisateurs identifiables (TV1, TV2, TV1A, TVRA, etc.), ayant chacun son propre moyen de commande, qui sont connectés pour recevoir des signaux de télévision haute fréquence standards, qui peuvent comporter des informations de télétexte, par l'intermédiaire de canaux vidéo sélectionnables (3D), comprenant un agencement pour présenter sélectivement d'autres informations audio et/ou vidéo à l'appareil d'utilisateur et pour commander l'appareil d'utilisateur, soit individuellement, soit en un groupe, à l'aide de signaux numériques produits et transmis indépendamment des signaux de télévision haute fréquence standards et du canal vidéo sélectionné, et susceptible d'une communication unidirectionnelle ou bidirectionnelle, ledit agencement comprenant un ordinateur central et une unité de commande (21, 25) connectés au moins pour transmettre les signaux numériques et commander ainsi l'appareil d'utilisateur sélectionné et des moyens de module spécialisés (2) inclus dans chaque appareil d'utilisateur entre une entrée (3A) dudit appareil d'utilisateur et les circuits couleur vidéo (11, 12, 13, 14) dudit appareil d'utilisateur et raccordés à son moyen de commande pour effectuer la commande en réponse aux signaux numériques, lesdits moyens de module (2) servant à recevoir et décoder les signaux numériques et comprenant un processeur de textes et de graphiques (2A) qui coopère avec une unité ayant une interface vidéo (2C) pour convertir lesdits signaux numériques en signaux vidéo analogiques produits localement qui sont ensuite présentés à l'utilisateur comme les autres informations audio et/ou vidéo, ces dernières étant sous la forme d'un texte ou d'images et de graphiques à haute résolution affichés sur un écran dudit appareil d'utilisateur indépendamment des images vidéo, lesquelles peuvent comporter un télétexte, dérivé des signaux de télévision, dans le sens que les autres informations vidéo peuvent être superposées sur les images vidéo sur l'écran dérivées des signaux de télévision.

2. Système selon la revendication 1, dans lequel chaque moyen de module (2) est intégré à l'intérieur de l'appareil d'utilisateur associé.

3. Système selon la revendication 1 ou la revendication 2, dans lequel les signaux numériques transmis auxdits moyens de module (2) sont représentés comme modulation de déphasage, modulation de code d'impulsion ou l'analogue.

4. Système selon l'une quelconque des revendications 1 à 3, dans lequel chaque moyen de module (2) comprend en outre une unité de mémoire (2B) pour stocker les informations relatives aux informations audio et/ou vidéo dérivées des signaux analogiques produits localement.

5. Système selon l'une quelconque des revendications 1 à 4, dans lequel chaque moyen de module (2) a une identité unique, par exemple une adresse numérique logique, grâce à laquelle l'ordinateur central et l'unité de commande (21, 25) peuvent établir une communication après sa présélection.

6. Système selon l'une quelconque des revendications 1 à 5, dans lequel chaque moyen de module (2) comprend une identité de groupe programmable, par exemple une adresse de groupe numérique logique, grâce à laquelle l'ordinateur central et l'unité de commande (21, 25) peuvent établir une communication simultanément ou après sa présélection.

7. Système selon l'une quelconque des revendications 4, 5 ou 6, dans lequel chaque moyen de module (2) est agencé pour communiquer avec ledit ordinateur central et ladite unité de commande (21, 25) de façon à présenter toutes données à un appareil individuel, un groupe d'appareils ou tous les appareils qui lui sont raccordés, indépendamment du fait que le ou les appareils d'utilisateur en question est (ou sont) en service ou non.

8. Système selon l'une quelconque des revendications précédentes, dans lequel chaque moyen de module (2) est raccordé à un bus de microcontrôleur (12C) de l'appareil d'utilisateur associé pour permettre la commande dudit moyen de module (2) par l'intermédiaire de toute unité fonctionnelle standard ou modifiée de l'appareil.

9. Système selon l'une quelconque des revendications précédentes, dans lequel chaque moyen de module (2) peut commander avec le moyen de commande associé les circuits électroniques et les fonctions de l'appareil d'utilisateur associé d'une manière correspondante à une unité fonctionnelle de télécommande standard (8).

10. Système selon l'une quelconque des revendications précédentes, dans lequel la communication entre l'ordinateur central et l'unité de commande (21, 25) et ledit moyen de module (2) dans tout appareil d'utilisateur de télévision s'effectue par l'intermédiaire d'un milieu standard, c'est-à-dire câble, fibres, liaisons, micro-ondes, etc.

11. Système selon l'une quelconque des revendications précédentes, dans lequel un commutateur analogique (19) est prévu dans lesdits circuits couleur vidéo de chaque appareil d'utilisateur et les signaux analogiques produits localement sont également envoyés à ce dit commutateur (19).
